# EUROPEAN PATENT APPLICATION

(11) **EP 3 372 832 A1**
(43) Date of publication of application: **12.09.2018**
(21) Application number: 17160006.7
(22) Date of filing: 09.03.2017
(51) Int. Cl.: F03G 6/06, F24J 2/07, F02G 1/055

(54) **HYBRID SOLAR POWERED STIRLING ENGINE**

(71) Applicant: Ripasso Energy AB, 421 30 Västra Frölunda (SE)
(72) Inventor: MATTSON, Johan, 212 32 MALMÖ (SE); ANDERSSON, Alf, 238 43 OXIE (SE)
(74) Representative: AWA Sweden AB

(57) **Abstract**

A hybrid energy conversion system comprising a sun concentrator, a radiation-to-heat exchanger arranged in a radiation chamber and configured to receive high density sun radiation from the sun concentrator along a central axis of the system, and a Stirling engine operable to convert heat from the radiation-to-heat exchanger into mechanical energy. The system further comprises a burner for combustion of a suitable fuel for operation of the Stirling engine, which burner is arranged between the entrance of the radiation chamber and the radiation-to-heat exchanger, and configured to direct at least two burning flames into the radiation chamber in a flame direction substantially transversal with respect to said central axis, such that no flame is directed towards the heat exchanger.

## Description

### Field of the invention

The present invention relates to a hybrid energy conversion system using sun radiation as primary power source, and an alternative combustion fuel as secondary power source.

### Background of the invention

With the threat of global warming becoming more imminent, the interest in renewal energy sources has increased rapidly. One source of renewable power is the sun, and various techniques are available for extracting power from sun radiation. Two of the most widely spread sun power technologies are fluid carrying channel systems which are warmed by the sun, and solar panels where silicon based panels generate electricity when radiated by the sun.

Another technology, which has gained increased popularity in recent years, is to convert solar energy to mechanical energy in a Stirling engine. The mechanical energy can then be used to generate electricity.

Typically, a parabolic concentrator is used to collect and concentrate solar radiation, and the Stirling engine is arranged in the focal point of the concentrator. The concentrator may be provided with a mechanical support mechanism which automatically adjusts the position and orientation of the concentrator to face the sun. Such concentrators are referred to as "solar-tracking". Systems of this type are developed by Ripasso Energy AB in Sweden.

Obviously, a solar powered Stirling engine will be unable to deliver energy at times when sufficient solar power is not available, e.g. at night and during cloudy conditions. For this reason, it is desirable to combine the solar energy source with a secondary energy source which is independent of the sun. Such systems are referred to as hybrid systems. The secondary energy source is preferably a liquid or gas combustion fuel such as biogas.

An example of such a hybrid system is disclosed by CN 102877980. According to this solution, the Stirling engine is arranged separate from the solar energy concentrator and a combustion chamber, which are selectively used to power the Stirling engine. While this indeed provides a hybrid system, able to deliver electrical power also when there is no sun, the separation of the Stirling engine from the solar concentrator significantly reduces efficiency during solar operation.

In order to maintain high solar efficiency - which of course is a primary objective - it is preferable to have the Stirling engine arranged to receive solar energy directly from the concentrator, without any intermediary processing. In order to provide hybrid operation of such a system, the combustion will need to take place in the same place, i.e. essentially in the focal point of the concentrator.

Document KR 101454285 very schematically discloses an example of such a system. In this document, the solar chamber used to collect solar radiation to heat the heating unit of the Stirling engine is used also as a combustion chamber for a secondary fuel. The combustion chamber needs to be closed during combustion mode, either by a transparent window which allows solar radiation to pass, or by a movable cover. The cover is in an open state during solar mode, and in a closed state during combustion mode.

A major challenge is to convert as much power as possible from the combustion into heat for operation of the Stirling engine. The prior art, such as KR 101454285, simply discloses a general burner inside the radiation chamber, and does not elaborate on any specific design of this burner.

Document CN2597893 discloses another example of a hybrid system with a burner within a solar chamber closed by a transparent window. Here, the burner directs a plurality of flames directly towards the heat exchanger.

### General disclosure of the invention

It is an object of the present invention to overcome, or at least mitigate, these problems with the prior art, and provide an improved burner for a hybrid solar powered Stirling engine.

According to a first aspect of the present invention, this and other objects are achieved by a hybrid energy conversion system comprising a sun concentrator for providing high density sun radiation, a radiation-to-heat exchanger arranged in a radiation chamber and configured to receive high density sun radiation from the sun concentrator through an entrance of the radiation chamber in a main radiation reception direction along a central axis of the system, and a Stirling engine operable to convert heat from the radiation-to-heat exchanger into mechanical energy. The system further includes a burner configured to use the radiation chamber as a combustion chamber for combustion of a suitable fuel for operation of the Stirling engine, the burner being arranged between the entrance of the radiation chamber and the radiation-to-heat exchanger, at a distance from the radiation-to-heat exchanger, and configured to direct at least two burning flames into the radiation chamber in a flame direction, wherein the flame direction of each flame is substantially transversal with respect to the central axis, such that no flame is directed towards the heat exchanger.

Such a system thus has a solar mode, where the Stirling engine is driven by solar energy received in the radiation chamber, and a combustion mode, where the Stirling engine is driven by heat from a combustion process in the radiation chamber (then operating as a combustion chamber).

The central axis should be understood as an axis normal to an aperture plane of the sun concentrator, aligned through the focal point of the sun concentrator.

The invention is based on the realization that the radiation-to-heat exchanger is optimized to receive power in the form of radiation, but is a relatively poor heat convector. Therefore, an elevated temperature within the combustion chamber should not be the only target of the combustion. Instead, it is the black body radiation from the hottest parts of the flame that will be most effectively received by the heat exchanger. Further, the shape of a flame, and thus also of the hottest core of the flame, is typically elongated, due to the pressure with which fuel is injected through the nozzle. This means that a majority of radiation power will take place in a direction radially away from the flame, and not in the flame direction.

Based on this insight, the present invention suggests orienting the nozzles of the burner such that the flames are directed substantially across the radiation chamber, and not pointing directly at the heat exchanger. Such orientation of the flames will ensure that as much as possible of the generated heat is in the form of radiation directed towards the heat exchanger.

In principle, the nozzles are oriented such that the flames, and in particular the hottest parts of the flames, cover as large portion as possible of a cross section of the combustion chamber in a plane normal to the radiation direction. The larger such a portion is, the larger the radiation along the central axis will be (for a given temperature). One part of this radiation will be directed directly towards the heat exchanger, while another part will be reflected by inner walls of the chamber before it reaches the heat exchanger.

Preferably, the burner directs at least three (e.g. four, six or more) flames into the chamber, to further increase the covered portion of the cross section. The flames are preferable symmetrically distributed around in a plane normal to the central axis, in order to create an even distribution of heat and radiation.

The flames can be offset with respect to the center axis, such that, in operation, a distal end of a first flame can impact a base portion of a second, adjacent flame. The distal end of the first flame, where the gas pressure is lower, will thus be forced by the higher pressure part of the second flame in a different direction. If three or more flames are arranged in this manner, each flames will be "curved" by another flame, so that the flames will rotate together, and in combination form a rotating torus or wheel of flame.

Such arrangement of flames in a burner or furnace is generally referred to as "tangential firing", which is known per se in the art. Conventionally, tangential firing has been used to achieve uniform and complete combustion by the turbulent mixing that takes place in the combined flame. Tangential firing further increases combusition speed, such that the flames become shorter and the radiation density increases.

In many conventional applications of tangential firing, the very high radiation density can cause problems. In the present context, however, the increased radiation density is beneficial, as it improves the heat exchange with the radiation-to-heat exchanger. Further, as each flame is "curved" into the rotating torus, the end of the flames will not reach the oposing chamber wall, at least not at normal angle. Thereby, the risk of "hot spots" caused by gases penetrating the typically porous walls of the chamber may be reduced.

A major part of the heat radiation emitted from the rotating flame torus will be directed out of its plane, i.e. towards the radiation-to-heat exchanger and towards the entrance of the chamber, which during combustion needs to be closed by a cover. The cover can be transparent (a window), or a movable cover which closes the chamber only during combustion mode. In any case, this cover will be heated by radiation from the flames, and then emit heat radiation in mainly direction directly towards the radiation-to-heat exchanger. A smaller part of the radiation from the rotating flame torus will escape from the sides of the torus, and be absorbed by the side walls of the chamber.

According to this embodiment, with several flames combining to form a rotating flame torus, about a quarter of heat radiation will be directed to neighboring flames, where it will be at least partly absorbed and contribute to the combustion process. One quarter will be directed directly towards the heat exchanger, and another quarter will be directed in the opposite direction, where it will be absorbed/reflected by the cover as mentioned above. Finally, approximate one quarter will be directed towards the inner walls of the chamber, where it will be absorbed and reflected.

It is noted that the inside of the movable cover in this case will receive a full quarter of the generated heat radiation on a relatively limited area. As a result, the cover will reach a significant temperature, and thus generate substantial heat radiation. A significant portion of this radiation will be directed directly towards the radiation-to-heat exchanger.

The heat resistivity of the cover will determine the most suitable distance between the flame torus and the cover, the desired radiation density, and the appropriate fuel/air mix. These and other parameters can be varied in order to optimize the heating of the cover, i.e. to maximize heat radiation from the cover without overheating. It is noted that active cooling of the opposite side of the cover may be an option to allow a very high temperature on the inside surface facing the heat exchanger while still protecting the cover against overheating.

It can be expected that the central region of the cover will reach the highest temperature. This central region will receive radiation from all parts of the flame torus, and will also be subject to less heat dissipation from moving gases as the center of the rotating torus will be substantially still. As a consequence, this center portion may emit a large portion of the heat radiation from the cover. This is beneficial, as radiation from this portion can pass relatively unobstructed through the center of the rotating flame torus.

In one embodiment, the cross section of the rotating torus substantially corresponds to the cross section of the high density received from the sun concentrator, when the system is operated in solar mode. This cross section is further advantageously aligned with a radiation receiving cross section of the heat exchanger, which thus be optimized for the same radiation receiving cross section in solar mode and combustion mode.

However, it is possible that a smaller cross section is beneficial, in order to optimize the ration of heat radiation that reaches the radiation-heat exchanger.

Each burning flame typically has a high temperature core with a temperature exceeding 1100 degrees Celsius, which core is elongated in the flame direction. Preferably, the burner is configured such that projections of these high temperature cores of each respective burning flame on a plane normal to the radiation reception direction do not substantially overlap. This will maximize the portion of the cross section that is covered by the core (i.e. the hottest part of the flame).

In embodiments of the invention, an offset between the flame direction and line parallel to the flame direction through the central axis is at least 20% or at least 25% of a chamber cross section radius, which has shown advantageous with respect to heat and radiation distribution.

The flames can be separated along the central axis, and for example form two sets of flames in two different planes separated along the central axis. This makes is possible to form more than one rotating torus. By distributing the flames along the central axis, the heat exchange with the walls of the chamber may be increased.

The burner may comprise at least two nozzles in fluid connection with a pressurized fuel source, each nozzle configured to direct one burning flame into the radiation chamber. The nozzles are preferable arranged outside a cross section of high density sun radiation received from the sun concentrator, in order to avoid being subjected to extreme heat radiation in solar mode.

The system may also include a radiation emitter arranged between the entrance and the burner, which radiation emitter is configured to be heated by the burner, such that the radiation emitter emits heat radiation in a direction towards the radiation-to-heat exchanger.

The flame direction is preferably slightly inclined towards the heat exchanger. Such inclination may contribute to the formation of a "swirl", i.e. a helical movement towards the heat exchanger. Notably, the flame direction is chosen in relation to the distance between the heat exchanger and the nozzle, such that the flame is not directed directly towards the heat exchanger. For example, an angle between the flame direction of each flame and a plane normal to the central axis may be less than 10 degrees, or even less than 5 degrees.

However, it is possible that also larger inclination angles may be useful, for example as large as 45 degrees. With such large inclination of the flames with respect to the normal of the central axis, the flames will not directly impact each other, at least not unless if there are as few as six or four flames. However, even in this case it is possible that the flames will still interact with each other, so as to create a rotating torus as discussed above.

The combustion chamber typically has an inlet for introducing air into the combustion chamber to enable combustion of the fuel, and an exhaust outlet for removal of exhaust gases from the chamber. The inlet is preferably arranged to introduce air in parallel to the flame direction of each flame respectively. The exhaust outlet may be arranged in connection to, or even beyond, the radiation-to-heat exchanger, so as to create a flow of gas from the entrance towards the radiation-heat-exchanger. This will increase the heat convection in the heat exchanger. Further, such an airflow will reduce gas movement at the surface of the cover (at the opposite end with respect to the heat exchanger) thus reducing heat dissipation at the surface of the cover and even further increasing heat build-up and heat radiation from the cover.

### Brief description of the drawings

The present invention will be described in more detail with reference to the appended drawings, showing currently preferred embodiments of the invention.
Figure 1 is a schematic perspective view of an energy conversion system according to an embodiment of the present invention.
Figure 2 is a schematic block diagram of some parts of the system in figure 1.
Figure 3a-c show operation of the movable cover in figure 2.
Figure 4 schematically shows arrangement of burner nozzles in the radiation chamber walls in cross section from the side.
Figure 5a-b schematically shows arrangement of burner nozzles in the radiation chamber walls in cross section along axis C in figure 5.
Figure 6 shows a partly broken away perspective view of a radiation chamber and a radiation-to-heat-exchanger suitable for implementing the present invention.

### Detailed description of preferred embodiments

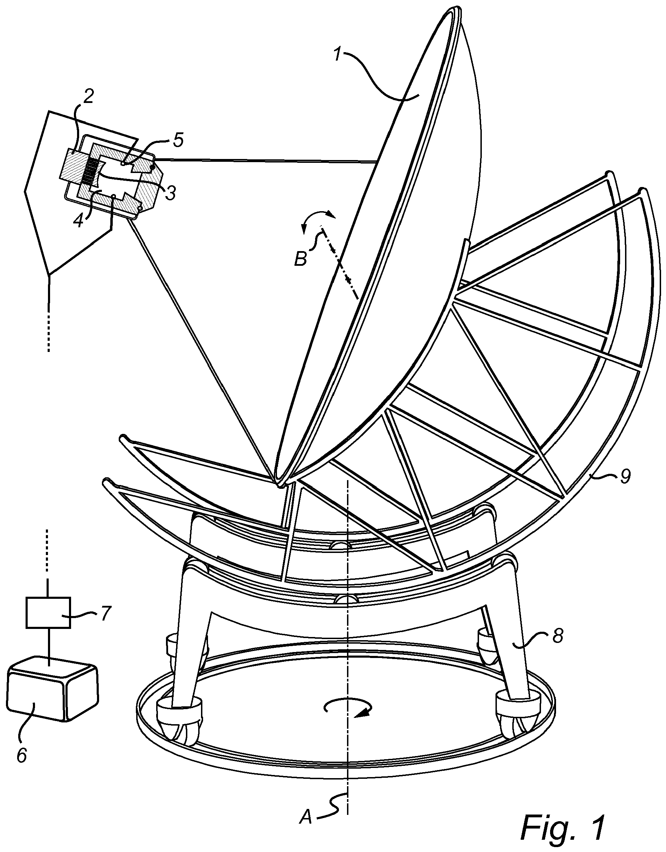

Figure 1 schematically illustrates an energy conversion system according to an embodiment of the present invention. The system generally comprises a sun concentrator, here in the form of a parabolic dish 1, and a Stirling engine 2. The Stirling engine has a radiation-to-heat exchanger 3 surrounded by a radiation chamber 4. The radiation chamber is located with its entrance in the focal point of the dish, and configured to receive concentrated solar radiation. The radiation-to-heat exchanger is further configured to contain the concentrated sun radiation and increase performance. The basic function of the Stirling engine is to convert solar radiation into mechanical energy, which in turn can be converted into electrical energy using an alternator or generator.

According to the present invention, the radiation chamber 4 is further provided with a burner arrangement 5, arranged to use the radiation chamber 4 as a combustion chamber for combustion of a liquid or gas fuel. The fuel can be provided to the burner 5 under pressure from a fuel storage 6. In case of a gas fuel, the fuel storage may be a pressurized gas tank, while in the case of a liquid fuel a fuel pump 7 may be used to provide the pressure. The burner is capable of generating sufficient heat convection and heat radiation inside the radiation chamber to operate the Stirling engine also at times when there is no, or insufficient, available sun radiation.

The combustion is preferably a "low pressure combustion", i.e. the pressure is typically below five bar.

The dish is operated by an actuator arrangement 8, 9, configured to adjust the orientation of the dish depending on the position of the sun so as to maximize the inflow of solar radiation into the radiation chamber. The arrangement here comprises a turning platform 8, configured to rotate the dish 1 around a vertical axis A. The arrangement further comprises a cradle 9 in which the dish is turnable around a horizontal axis B. During night time, and at any other time when the solar dish is not collecting solar radiation, the actuator arrangement may be configured to place the dish in an inactive resting position. As the dish may have a diameter of several meters, the resting position is preferably horizontal, so as to reduce forces caused by wind.

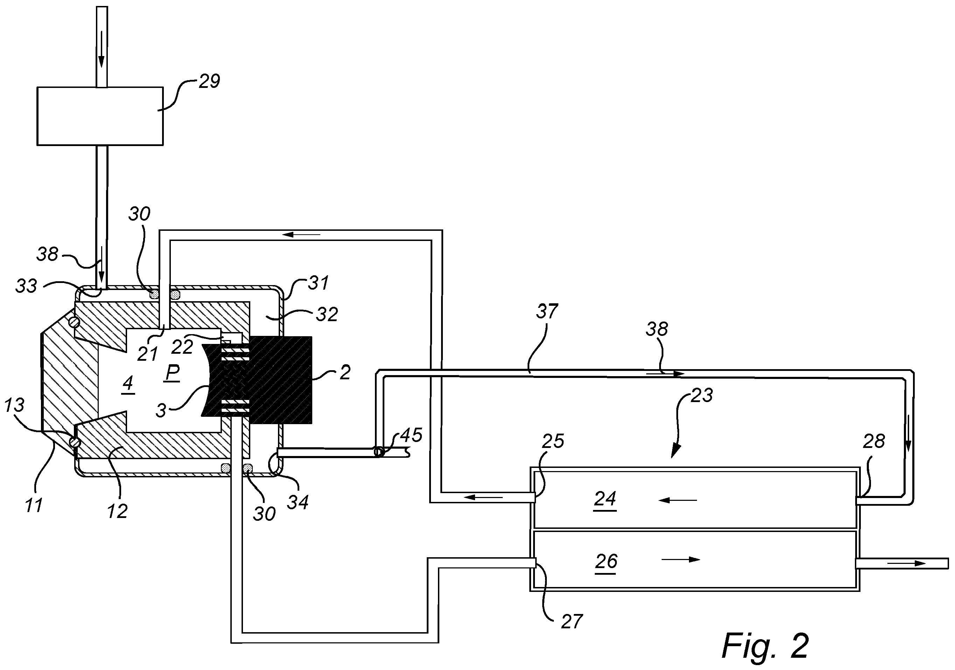

Selected parts of the heat conversion system, including the Stirling engine 2, its radiation-to-heat-exchanger 3 and the radiation chamber 4, are illustrated schematically in figure 2.

The details of the Stirling engine and its radiation-to-heat exchanger are known in the art, and will not be further described here.

In order to efficiently serve as a combustion chamber, the entrance of the radiation chamber needs to be closed during combustion. In the embodiment illustrated in figure 2, the radiation chamber 4 is closed with a movable cover 11. Such a cover can be operated to close the chamber when the system is operated in combustion mode, and then removed to allow sun radiation into the chamber during solar mode. The cover 11 is here sealed against the chamber walls 12 by means of a suitable sealing element 13..

It is noted that during alignment, i.e. when the dish 1 is operated in or out of the sun radiation, the entrance 14 of the radiation chamber may briefly be subjected to concentrated solar radiation. For this purpose, in absence of effective cooling of the entrance, selected portions of the entrance surfaces 15 may need to be shielded to withstand such radiation. In the illustrated embodiment, the movable cover 11 can serve to provide such sealing.

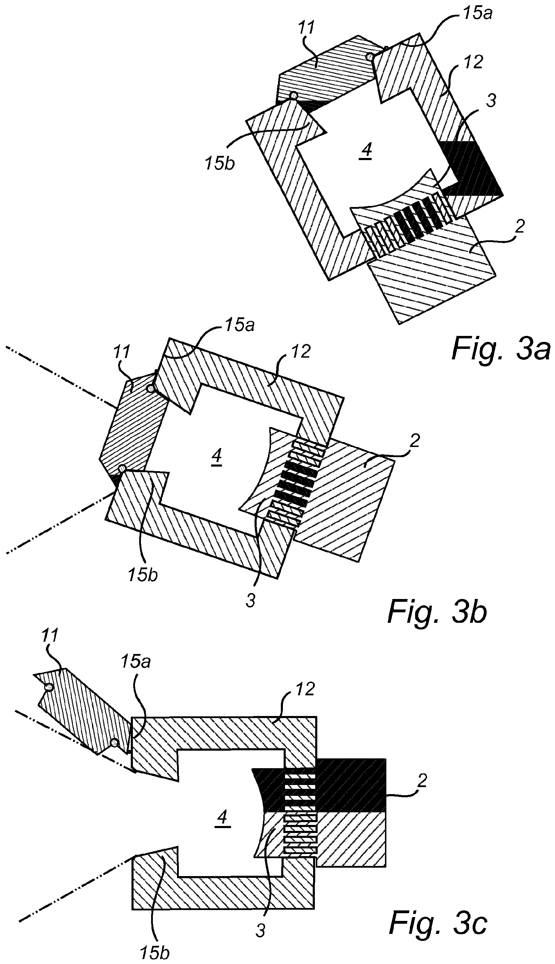

As illustrated in figure 3a-c, the chamber can be closed by the cover 11 when the dish 1 is not facing the sun (figure 3a). The cover is maintained in closed position as the dish is operated by the actuating arrangement 8, 9 to face the sun. At the final stage of such motion (figure 3b), concentrated solar radiation will impact the cover, but will be prevented to impact the entrance surfaces 15 or other parts of the chamber walls 12. When the dish 1 is in position, the cover can be removed (figure 3c), thereby allowing the concentrated solar radiation to enter the entrance 14 (without hitting the entrance surfaces 15).

Alternatively, if sufficiently effective cooling of the entrance is provided, e.g. water cooling, the movable cover can be removed first, before the dish is operated to directed towards the sun.

In another embodiment, the entrance of the radiation chamber is permanently closed by a transparent window, made e.g. of glass. Returning to figure 2, the chamber 4 is provided with an inlet 21 for introducing air into the radiation chamber 4 to enable combustion of the fuel, and an exhaust outlet 22 for removal of exhaust gases. In order to increase efficiency the system here includes a heat recuperator 23, configured to use the exhaust air to pre-heat the air which is supplied to the inlet. The recuperator has a primary side 24 with a primary outlet 25 fluidly connected to the inlet 21 of the combustion chamber and a secondary side 26 with a secondary inlet 27 fluidly connected to the exhaust outlet 22. The primary inlet 28 is connected to a fan, or pump 29, configured to create a flow of air through the primary side 24, the combustion chamber 4, and the secondary side 26.

The walls 12 of the radiation chamber need to sustain very high temperatures (in the order of 1500 degrees Celsius). Typically, they are made of a porous ceramic material, but other materials are also possible. If the material in the chamber walls are permeable to air, it may be advantageous, or even necessary, to provide at least parts of the outside of the chamber walls with an air-tight coating, in order to enable efficient combustion in the chamber. Such coating may be unnecessary if the walls themselves are sufficiently air-tight, or even completely air-tight.

The sealing coating is preferable flexible, i.e. it is capable of expanding with temperature without losing its sealing properties. As an example, a polymer material may be used, e.g. a silicone rubber.

In one embodiment, the chamber is composed of several separate wall partitions, joined together along joints which are less air tight than the walls (exhibit less air resistance). In solar mode, this is not a critical issue, but in combustion mode it may be necessary to seal such joints in order to avoid excessive leakage along the joints.

The radiation chamber 4 can further be enclosed by an enclosure 31. The enclosure may be made of metal or other suitable material, and creates an intermediate space 32 surrounding the radiation chamber. The enclosure 31 is further substantially sealed, although for practical reasons it will not be completely air-tight. For example, a controlled leakage may be used to cool sealing elements 30 provided to seal the inlet 21 and outlet 22. The enclosure has an inlet 33 arranged to introduce cooling air into the intermediate space, and an outlet 34 arranged to allow escape of air which has been heated by dissipated heat from the combustion chamber.

The outlet 34 can be connected to the recuperator inlet 28 via a conduit 37, in order to thereby recycle as much as possible of the heat dissipating through the walls of the chamber 4. An evacuation valve 45 may be arranged along the conduit 37 to allow discharge of air from the enclosure outlet 34.

During combustion, the pump can be configured to adaptively control the flow based e.g. on air mass flow. This flow is primarily governed by the amount of air required for the combustion process. The entire system is further configured to ensure that the pressure in the intermediate space 32 during combustion is higher than the pressure in the combustion chamber. It is noted that the pressure in the combustion chamber during combustion typically is below 5 bar, and possibly even below 1 bar.

In operation, the energy conversion system has two modes; a solar mode and a combustion mode. The decision to enter combustion mode may be scheduled based on time of day, or may be adaptive, based on the currently available sun-light.

In solar mode, the actuator arrangement 8, 9 (see figure 1) is operated so that the dish 2 faces the sun, and concentrated sun radiation enters the chamber 4. This concentrated radiation impacts the radiation-to-heat exchanger 3, which in turn provides heat for operation of the Stirling engine 2.

It is possible that the enclosure 31 may reduce heat dissipation from the outside of the chamber 4 such that the temperature of the intermediate space and any sealing coating of the chamber 4 risks reaching a too high temperature. In such a case, the pump may be activated during solar mode, to create a slight air flow through the intermediate space. In case of a design according to figure 2a, the flow 38 is supplied to the intermediate space 32, and the valve 45 is set to allow discharge of the entire flow. In case of a design according to figure 2b, the valve 39 is set so that the entire flow from the pump is directed to the intermediate space 32 (i.e. flow 40a is equal to flow 38). The valve 45 is again set to allow discharge of the entire flow.

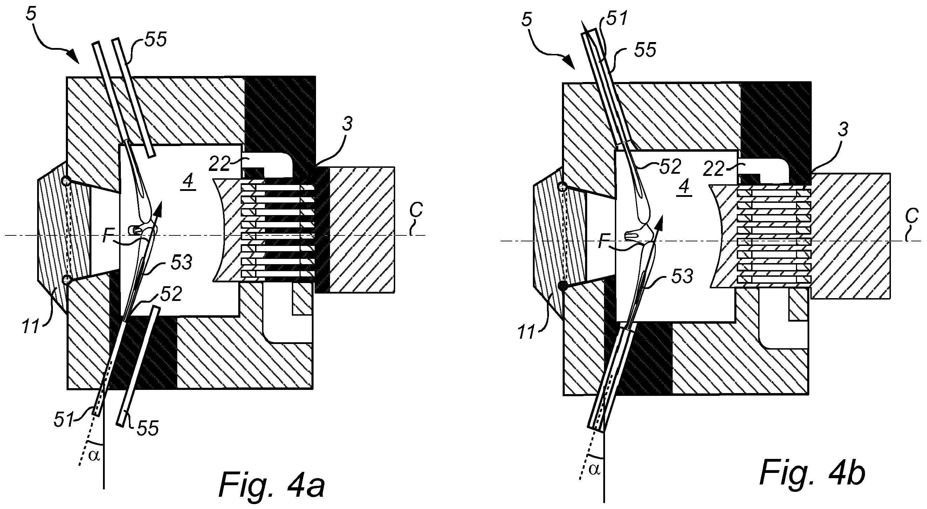

In combustion mode, the actuator arrangement 8, 9 is preferably operated so that the dish does not face the sun. Typically, it is operated to an inactive resting position. Further, if the radiation chamber 4 is not permanently closed as indicated in figure 4, the movable cover 11 has been operated to close the radiation chamber 4. Fuel is then provided by the fuel pump 7 to the burner arrangement 5, and is ignited to cause combustion inside the chamber 4, which now acts as a combustion chamber. Radiation and convection heat reaches the radiation-to-heat converter, which again provides heat for operation of the Stirling engine.

During combustion, the pump 29 creates an air flow 38 which is fed to the intermediate space 32 and to the primary side 24 of the recuperator 23, and further into the combustion chamber 4 via the inlet 21. At the same time, exhaust gases leave the combustion chamber 4 through the outlet 22, and is fed to the secondary side 26 of the recuperator, where they serve to per-heat the air passing through the primary side 24.

Only serving as a non-restricting example, the air provided by the pump 29 is ambient air with a temperature in the order of 20-30°C. In the intermediate space, this air may be heated to around 40 - 60 °C, before it is provided to the recuperator (figure 2a) or recombined with the air flow 40a (figure 2b). Depending on the design, the air reaching the recuperator may have a temperature of maybe 30 - 50 °C. The exhaust gases, on the other hand, may have a temperature in the order of 800-1000 °C, and may increase the temperature of the incoming air to 700 - 900 °C. The temperature of air leaving the secondary side of the recuperator may be as low as 100-150 °C.

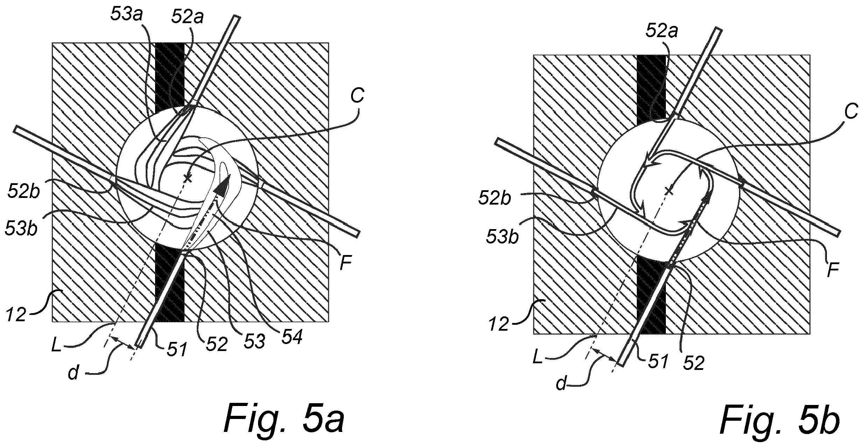

The configuration of the burner 5 and its nozzles (which are not shown in figure 2 for simplicity reasons) will now be further described with reference to figures 4a, 4b and 5a-b.

Figure 4a and 4b show the radiation chamber/combustion chamber 4 in cross section from the side, while figure 5 shows it in cross section along the central axis C. The chamber 4 is closed by the cover 11.

The burner 5 comprises a set of fuel tubes 51 extending through the walls 12, each tube 51 connected to a nozzle 52 inside the chamber wall 12. Only two tubes 51 and nozzles 52 are shown in figure 4, but the burner 5 may have three, four, five or more nozzles, symmetrically arranged around the chamber periphery. It is noted that the nozzles should not be exposed to the high density solar radiation received from the dish 2 in solar mode. Therefore, the nozzles 52 are preferably placed so close to the chamber wall 12 that they are outside the main sun radiation direction along the central axis C. In the illustrated case, the nozzles are arranged in the wall 12.

Each nozzle 52 is configured to introduce pressurized gas or liquid fuel from the tank 6 (figure 1) into the chamber 4. The fuel is ignited by appropriate means (not shown) such as a spark plug, so that, in combustion mode, burning flames 53 are directed into the chamber 4 in a flame direction F. The flame direction of each flame is substantially transversal to the center axis C of the system, i.e. the main radiation reception direction. In figure 5, the flame direction F is slightly inclined towards the heat exchanger 3, with an angle α between the flame direction F and a plane normal to the central axis C of approximately 10 degrees.

The air inlet 21, schematically indicated in figure 2, is shown in figures 4a and 4b as a set of air tubes 55, configured to introduce the air from the recuperator 23 in parallel with the direction F. The air thus contributes to the directing and control of the flame 53.

In figure 4a, the fuel tubes 51 and air tubes 55 are parallel and separated from each other. In figure 4b, the fuel tubes 51 are instead arranged inside the air tubes 55, which have a greater cross section. The fuel tubes are here shown as coaxial with the air tubes 55, but other options are also possible.

As illustrated in figure 5a-b, the flame direction F of each flame is offset with respect to the center axis C, i.e. the flame is not directed towards the axis C. Instead, the flame direction is separated a distance d from a line L parallel with the flame direction through the center axis C. The distance d is here approximately half of the radius r of the chamber cross section. A different distance d is also possible, including a smaller ratio such as 25% of r or even 20% of r.

Figure 5a further illustrates how the flame 53a from a first nozzle 52a is directed towards the base of a second flame 53b emerging from a second nozzle 52b. Close to the nozzle 52b, the second flame 53b has a relatively high gas pressure, and the this pressure will cause the distal portion of the first flame 53a to deviate from its flame direction and bend to eventually be aligned with the second flame 53b. This same process will take place in all flames 53, such that the four flames 53 combine to an aggregated flame resembling a rotating torus or toroid. Such arrangement of burner nozzles in a combustion chamber is sometimes referred to as "tangential firing".

Figure 5b shows the shaping of the rotating flame more schematically.

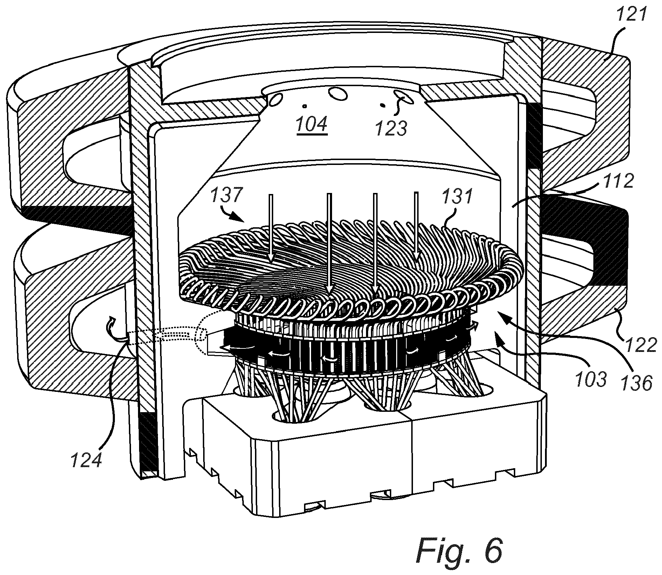

Figure 6 shows a more detailed example of a design of the radiation chamber 104 having walls 112, and a radiation-to-heat exchanger 103 arranged inside the chamber 104. Instead of a movable cover, as indicated in figures 2 and 3, the chamber is here closed by a transparent cover 111.

The chamber 104 is here surrounded by two annular manifolds; a first manifold 121, closer to the entrance, for introducing air for the combustion process, and a second manifold 122, closer to the Stirling engine, for exhausting combustion gases (the Stirling engine is not shown in figures 5 and 6, but is located below the chamber 104). Both manifolds 121, 122 are fluidly connected to the interior of the chamber, in the illustrated case by a plurality of openings 123, 124, distributed around the periphery of the chamber 104.

The openings 123 correspond to the channels 51 illustrated schematically in figure 4a-b and 5a-b. It is through these openings that the flames from the nozzles 52 will enter the chamber 104.

The radiation-to-heat exchanger 103 is here formed by a plurality of tube loops 131, each extending from the Stirling engine into the chamber 104. The tube loops 131 contain a heat carrying medium, here referred to as a working gas, which is reciprocated during repeated heating to operate the Stirling engine. Several tube loops 131 may be connected to the same Stirling engine cylinder. For example, in the case of four cylinders, the tube loops will be divided into four quadrants.

Further, an annular radiation shield is formed by a protruding lip 126 of the chamber wall. The function of this radiation shield will be discussed below.

The front part of the radiation-to-heat-exchanger 103, i.e. the part facing the entrance of the chamber 104 forms a radiation exposed part of the radiation-to-heat exchanger 103. In the illustrated case, this front part is formed by the hat 137 of a mushroom shape as well as the inside of the "foot" 136 of the mushroom. As is clear e.g. from figure 5, the curvature of the tube loops 131 ensure that essentially no radiation can penetrate the hat 137. As a result, the outside of the foot 136 is substantially shielded from heat radiation. Heat convection structures may be arranged on the outer sections of the tube loop forming the outside of the foot.

At the same time, the U-shaped portions 134 are still slightly displaced from each other, so that combustion gases may pass through the hat 137, and reach the foot 136 of the mushroom shape.

In figure 5, this flow of combustion gas is indicated by arrows. The annular exhaust manifold 122, and openings 124, ensure that the flow is directed from the radiation chamber 104 past the front part of the radiation-to-heat exchanger, i.e. through the U-bends of the tube loops 131 forming the "hat" 137 of the "mushroom". The flow is then directed radially outwards past the outer sections of the tube loops 131 and further through the openings 124. Along that path the flow will pass the heat convection structure 140, where a portion of its thermal energy will be transferred to the heat convection structure, and further to the working gas in the tubes.

As the radiation exposed part of the radiation-to-heat exchanger here extends radially outside the second sections 133, there is a risk that a portion of the combustion gases may escape on the outside of the outer sections and the heat convection structures 140. For this reason, the lip 126 is designed to guide any such flow of combustion gas radially inwards over the heat convection structure 140 into the foot 136, thereby forcing also this flow to pass the outer sections the heat convection structures 140 before leaving the chamber 104 through the openings 124.

The person skilled in the art realizes that the present invention by no means is limited to the preferred embodiments described above. On the contrary, many modifications and variations are possible within the scope of the appended claims. For example, the mechanical design of the radiation chamber may be different than that schematically indicated in the drawings. Further, the air flow control described with reference to figure 2 may be include additional elements and functions, such as additional sensory, control circuitry, valves and actuators.

## Claims

1. A hybrid energy conversion system comprising:
a sun concentrator for providing high density sun radiation,
a radiation-to-heat exchanger arranged in a radiation chamber and configured to receive high density sun radiation from the sun concentrator through an entrance of the radiation chamber in a main radiation reception direction along a central axis of the system, and
a Stirling engine operable to convert heat from the radiation-to-heat exchanger into mechanical energy,
**characterized by**
a burner configured to use said radiation chamber as a combustion chamber for combustion of a suitable fuel for operation of the Stirling engine,
said burner being arranged between the entrance of the radiation chamber and the radiation-to-heat exchanger, at a distance from the radiation-to-heat exchanger, and configured to direct at least two burning flames into the radiation chamber in a flame direction,
wherein the flame direction of each flame is substantially transversal with respect to said central axis, such that no flame is directed towards the radiation-to-heat exchanger.

2. The hybrid energy conversion system according to claim 1, wherein the burner is configured to direct at least three burning flames into the radiation chamber.

3. The hybrid energy conversion system according to claim 2, wherein said at least three burning flames are symmetrically distributed in a plane normal to the central axis.

4. The hybrid energy conversion system according to claim 2 or 3, wherein the flame direction of each flame is offset with respect to said central axis, so that, in operation, a distal end of one flame impacts a base portion of an adjacent flame, the flames thereby forming a rotating torus.

5. The hybrid energy conversion system according to claim 4, wherein a cross section of the rotating torus substantially corresponds to a cross section of high density sun radiation received from the sun concentrator.

6. The hybrid energy conversion system according to claim 4 or 5, wherein each burning flame has a high temperature core with a temperature exceeding 1100 degrees Celsius, said core being elongated in the flame direction, and wherein projections of the cores of each respective burning flame on a plane normal to the radiation reception direction do not overlap.

7. The hybrid energy conversion system according to one of claims 4-6, wherein an offset between the flame direction and line parallel to the flame direction through the central axis is at least 20% of a chamber cross section radius.

8. The hybrid energy conversion system according to one of claims 2-7, wherein said at least three burning flames include a first set of flames in a first plane, and a second set of flames in a second plane, wherein said first and second planes are separated along the central axis.

9. The hybrid energy conversion system according to any one of the preceding claims, wherein said burner comprises at least one nozzle in fluid connection with a pressurized fuel source, each nozzle being configured to introduce a mixture of fuel and air into the radiation chamber.

10. The hybrid energy conversion system according to claim 9, wherein said at least one nozzle is arranged outside a cross section of high density sun radiation received from the sun concentrator.

11. The hybrid energy conversion system according to any one of the preceding claims, further comprising a cover, arranged to close the radiation chamber during operation of the burner, an inside of said cover being configured to be heated by the burner, such that said inside emits heat radiation in a direction directly towards the radiation-to-heat exchanger.

12. The hybrid energy conversion system according to claim 11, wherein the cover is movable.

13. The hybrid energy conversion system according to any one of the preceding claims, further comprising a radiation emitter arranged between the entrance and the burner, said radiation emitter being configured to be heated by the burner, such that the radiation emitter emits heat radiation in a direction towards the radiation-to-heat exchanger.

14. The hybrid energy conversion system according to any one of the preceding claims, wherein the flame direction of each flame is inclined towards the radiation-to-heat exchanger.

15. The hybrid energy conversion system according to any one of the preceding claims, wherein said combustion chamber has an inlet for introducing air into the combustion chamber to enable combustion of the fuel, and an exhaust outlet for removal of exhaust gases from the chamber,
wherein said exhaust outlet is arranged to create a flow of gas from said entrance towards said radiation-heat-exchanger.
